# EUROPEAN PATENT SPECIFICATION

(11) **EP 4 109 935 B1**
(45) Date of publication and mention of the grant of the patent: **06.11.2024**
(21) Application number: 20929906.4
(22) Date of filing: 10.04.2020
(51) Int. Cl.: H04W 4/06

(54) **SESSION PROCESSING METHOD AND DEVICE, AND STORAGE MEDIUM**
SITZUNGSVERARBEITUNGSVERFAHREN UND -VORRICHTUNG SOWIE SPEICHERMEDIUM
PROCÉDÉ ET DISPOSITIF DE TRAITEMENT DE SESSION, ET SUPPORT DE STOCKAGE

(43) Date of publication of application: 28.12.2022
(73) Proprietor: GUANGDONG OPPO MOBILE TELECOMMUNICATIONS CORP., LTD., Dongguan, Guangdong 523860 (CN)
(72) Inventor: LIU, Jianhua, Dongguan, Guangdong 523860 (CN); YANG, Haorui, Dongguan, Guangdong 523860 (CN)
(74) Representative: Taor, Simon Edward William
(86) International application number: PCT/CN2020/084121
(87) International publication number: WO 2021/203398

(56) References cited:
- EP-A1- 3 217 691
- CN-A- 102 740 234
- CN-A- 105 635 983
- CN-A- 110 972 078
- US-A1- 2008 101 376
- US-A1- 2013 279 395
- US-A1- 2019 223 250
- HUAWEI ET AL: "Introduction of SC-PTM", vol. RAN WG2, no. Anaheim, US; 20151116 - 20151120, 11 December 2015 (2015-12-11), XP051064914, Retrieved from the Internet <URL:http://www.3gpp.org/ftp/tsg_ran/WG2_RL2/Specifications/201512_draft_specs_after_RAN_70/> [retrieved on 20151211]
- LG ELECTRONICS: "New MBS architecture and procedures", 3GPP DRAFT; S2-2000350, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Incheon, Korea; 20200113 - 20200117, 7 January 2020 (2020-01-07), Mobile Competence Centre ; 650, route des Lucioles ; F-06921 Sophia-Antipolis Cedex ; France , XP051842423

## Description

### TECHNICAL FIELD

Embodiments of the present disclosure generally relate to the communication technical field, and more particularly, to a session processing method and device.

### BACKGROUND

In the fifth generation mobile network (5G) system, a data network may send data to a terminal through a user plane unicast connection established with the terminal. The existing 5G network system does not support a multicast broadcast transmission mechanism for the time being. If the data network needs to send the same data to multiple terminals, it needs to use the user plane unicast connection to send the same data to a group of terminals, resulting in a waste of network resources.

US2019223250A1 discloses methods and systems for modifying or releasing a Multicast/Broadcast (MB) session for delivery of MB Data to a plurality of Electronic Devices (EDs) connected to a (Radio) Access Network (R)AN node is disclosed. The method includes receiving one or more triggers, and instructing the various network functions and (R)AN nodes to modify (or release) the MB session dependent on the received trigger.

EP3217691A1 discloses methods and apparatuses for processing indication information. According to a method for processing indication information, a predetermined network element determines a Multimedia Broadcast Multicast Service (MBMS) to be suspended; and the predetermined network element sends, to an Evolved Node B (eNB), indication information used for indicating that the MBMS is to be suspended. The indication information is used for indicating the eNB receiving the indication information to send Multicast Channel (MCH) Scheduling Information (MSI) to User Equipment (UE), and the MSI includes a specific value used for notifying the UE of the MBMS to be suspended.

### SUMMARY

Embodiments of the present disclosure provide a session processing method and device and a storage medium which can improve the utilization of network resources.

According to a first aspect, an embodiment of the present disclosure provides a session processing method as set out in claim 1. Optional features are set out in claims 2 to 4.

According to a second aspect, an embodiment of the present disclosure provides a session processing method as set out in claim 5. Optional features are set out in claims 6

According to a third aspect, an embodiment of the present disclosure provides a Multicast Broadcast (MB)-Session Management Function (SMF) network element as set out in claim 7. Optional features are set out in claims 9

According to a fourth aspect, an embodiment of the present disclosure provides a Multicast Broadcast (MB)-Session Management Function (SMF) network element as set out in claim 10. Optional features are set out in claims 11.

The present invention also relates to an access device according to claim 12. Embodiments of the present disclosure provide a session processing method and device which can improve the utilization of MBS session resources. The method may include the following contents. When it is determined that there is no data transmission or there is no UE access on an MBS session in an active state, an MBS session suspend process is initiated, and suspending the MBS session can release the MBS session resources. When it is determined that there is data transmission or there is UE access on an MBS session in a deactivated state, an MBS session activation process is initiated to activate or restart the MBS session resources. The MBS session resources may include air interface resources and tunnel resources between an access network device and a core network device. The above process of activating and deactivating the MBS session can effectively utilize network resources, avoid waste of network resources, and improve system communication quality.

### BRIEF DESCRIPTION OF THE DRAWINGS

FIG. 1 is a schematic diagram of a network architecture according to an embodiment of the present disclosure.
FIG. 2 is a schematic diagram of a network architecture according to an embodiment of the present disclosure.
FIG. 3 is an interaction diagram of a session processing method according to an embodiment of the present disclosure.
FIG. 4 is an interaction diagram of a session processing method according to an embodiment of the present disclosure.
FIG. 5 is an interaction diagram of a session processing method according to an embodiment of the present disclosure.
FIG. 6 is an interaction diagram of a session processing method according to an embodiment of the present disclosure.
FIG. 7 is an interaction diagram of a session processing method according to an embodiment of the present disclosure.
FIG. 8 is an interaction diagram of a session processing method according to an embodiment of the present disclosure.
FIG. 9 is an interaction diagram of a session processing method according to an embodiment of the present disclosure.
FIG. 10 is an interaction diagram of a session processing method according to an embodiment of the present disclosure.
FIG. 11 is a schematic structural diagram of an access network device according to an embodiment of the present disclosure.
FIG. 12 is a schematic structural diagram of a session management device according to an embodiment of the present disclosure.
FIG. 13 is a schematic structural diagram of an access network device according to an embodiment of the present disclosure.
FIG. 14 is a schematic structural diagram of a session management device according to an embodiment of the present disclosure.
FIG. 15 is a schematic diagram of a hardware structure of an access network device according to an embodiment of the present disclosure.
FIG. 16 is a schematic diagram of a hardware structure of a session management device according to an embodiment of the present disclosure.

### DETAILED DESCRIPTION

In order to make the purposes, technical solutions and advantages of the embodiments of the present disclosure clearer, the technical solutions in the embodiments of the present disclosure will be described clearly and completely below with reference to the drawings in the embodiments of the present disclosure. Obviously, the described embodiments are a part of the embodiments of the present disclosure, but not all of the embodiments. Based on the embodiments in the present disclosure, all other embodiments obtained by those of ordinary skill in the art without creative efforts should fall within the protection scope of the present disclosure.

The terms "comprising" and "having" in the description, claims, and the above-mentioned drawings of the embodiments of the present disclosure and any modifications thereof are intended to mean non-exclusive inclusion. For example, a process, a method, a system, a product or a device which includes a series of steps or units is not necessarily limited to those steps or units expressly listed, but may include other steps or units not expressly listed or inherent to the process, method, product or device.

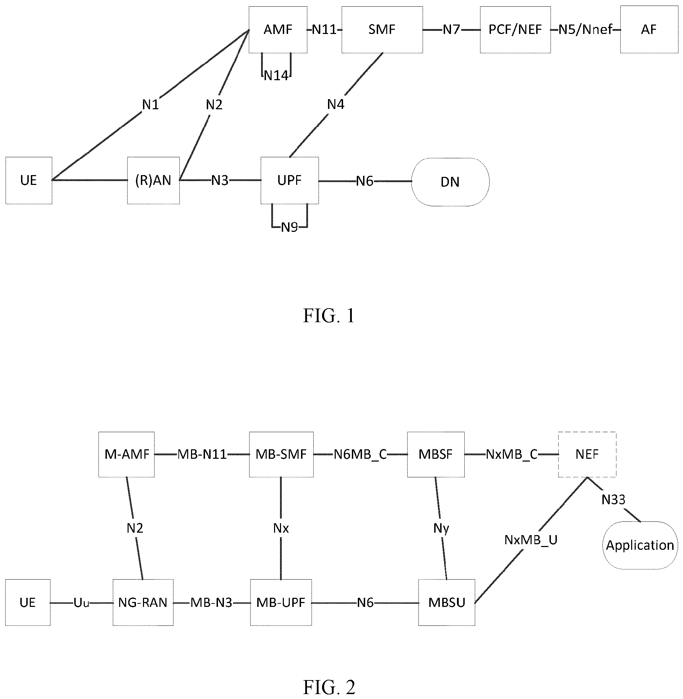

In order to better understand a session processing method provided by the embodiments of the present disclosure, the following describes the network architecture involved in the embodiments of the present disclosure. FIG. 1 is a schematic diagram of a network architecture according to an embodiment of the present disclosure. As shown in FIG. 1, the 5G network architecture released by the 3GPP standards organization includes: a terminal (user equipment, UE), an access network supporting 3GPP technologies (including Radio Access Network, RAN or Access Network, AN), a User Plane Function (UPF) network element, an Access and Mobility Management Function (AMF) network element, a Session Management Function (SMF) network element, a Policy Control Function (PCF) network element, an Application Function (AF) and a Data Network (DN).

Those skilled in the art may understand that the 5G network architecture shown in FIG. 1 does not constitute a limitation of the 5G network architecture. In practical implementations, the 5G network architecture may include more or less network elements than those shown in the figure, or combination of certain network elements is also possible, etc. It should be understood that the AN or RAN is represented in FIG. 1 using (R)AN. In the drawings of the embodiments of the present disclosure, the access network being an RAN is taken as an example for description.

The terminal in embodiments of the present disclosure may be User Equipment (UE), a handheld terminal, a notebook computer, a subscriber unit, a cellular phone, a smart phone, a wireless data card, a Personal Digital Assistant (PDA) computer, a tablet, a wireless modem, a handheld device, a laptop computer, a cordless phone or a Wireless Local Loop (WLL) station, a Machine Type Communication (MTC) terminal, a handheld device with wireless communication capabilities, a computing device, a processing device connected to a wireless modem, a unmanned aerial vehicle, an in-vehicle device, a wearable device, an Internet of Things terminal, a virtual reality device, a terminal device a future 5G network, or a terminal in a future evolved Public Land Mobile Network (PLMN), etc.

In the embodiments of the present disclosure, the access network device is an access device through which a terminal accesses the network architecture in a wireless manner, and the access network device is mainly responsible for radio resource management, Quality of Service (QoS) management, data compression and encryption at the air interface side, for example, a base station (NodeB), an evolved base station (eNodeB), a base station in 5G mobile communication system or New Radio (NR) communication system, or a base station in a future mobile communication system, etc.

The UPF network element, the AMF network element, the SMF network element and the PCF network element are network elements of the 3GPP core network (core network element for short). The UPF network element may be called a user plane function network element, which is mainly responsible for the transmission of user data. Other network elements may be called control plane function network elements, which are mainly responsible for authorization, authentication, registration management, session management, mobility management and policy control and so on, to ensure reliable and stable transmission of user data.

The UPF network element may be used to forward and receive terminal data. For example, the UPF network element may receive data for a service from the data network and transmit it to the terminal through the access network device. The UPF network element may also receive user data from the terminal through the access network device and forward it to the data network. The transmission resources allocated and scheduled by the UPF network element for the terminal are managed and controlled by the SMF network element. The bearer between the terminal and the UPF network element may include: a user plane connection between the UPF network element and the access network device, and establishing of a channel between the access network device and the terminal. The user plane connection is a Quality of Service (QoS) flow that can establish data transmission between the UPF network element and the access network device.

The AMF network element may be used to manage the access of the terminal to the core network, such as, terminal location update, network registration, access control, terminal mobility management, terminal attachment and detachment, and so on. The AMF network element may also provide storage resources of the control plane for a session in the case of providing services for the session of the terminal, so as to store a session identity, or a SMF network element identity associated with the session identity, and the like.

The SMF network element may be used to select a user plane network element for the terminal, redirect the user plane network element for the terminal, assign an Internet Protocol (IP) address to the terminal, establish a bearer (also called as session) between the terminal and the UPF network element, to perform session modification, release, or QoS control.

The PCF network element is used to provide policies to the AMF network element and the SMF network element, such as, QoS policies, or slice selection policies, and so on.

The AF network element is used to interact with the 3GPP core network element to support application influence on traffic routing, to access a network exposure function, and to interact with the PCF network element for policy control, and so on.

The DN may provide data services for users such as IP multi-media service (IMS) networks or the Internet. There may be various Application Servers (ASs) in the DN, providing different application services, such as operator services, Internet access or third-party services, and so on. The AS may implement the function of AF.

It should be noted that the following new functions are added to the above-mentioned terminal, access network device, and NFs network element functional entities of the 5G core network in the embodiments of the present disclosure:
(1) Terminal: supports policy configuration extension to Multicast Broadcast Service (MBS); supports Session Management SM extension for MBS flows; increases signaling for MBS flows, such as, transmits MBS flows through SM signaling or user plane Internet group management protocol (IGMP); supports MBS at the AS layer of the application server.
(2) Access network device: receives MBS flows through N3 interface and transmit the MBS flows to the terminal through an air interface; the transmission of the MBS flows is switched between multicast and unicast; the access network device configures how the UE receives the MBS flows at the AS layer.
(3) UPF network element: supports packet filtering for MBS flows, supports transmission of MBS flows to RAN through point-to-point or point-to-multipoint mode; receives configuration information for 5G MBS flows from the SMF network element; if UE sends data packets through IGMP, the UPF network element detects the IGMP data packets and notifies the SMF network element; the UPF network element may receive both unicast and broadcast flows; the UPF network element is configured to use point-to-multipoint transmission of MBS flows in a certain area, and to transmit certain unicast flows for some UEs.
(4) SMF network element: controls MBS transmission according to MBS policies received from PCF network element; configure MBS flows for the UPF network element, and point-to-point or point-to-multipoint transmission; configures MBS flows and QoS information for RAN; configures the SM configuration for MBS flows (that is, the SM configuration that includes the MBS flows on the UE side) for UE; the SMF network element supports unicast and MBS services.
(5) PCF network element: supports multicast service policies, including QoS parameters, such as quality of service class identifier (5QI), Maximum Bit Rate (MBR), Guaranteed Bit Rate (GBR); provides policy information of MBS sessions to the SMF network element; directly receives MBS service information from the AF, or receives the MBS service information from the AF through a Network Exposure Function (NEF) network element.
(6) NEF network element: 5G MBS service exposure; negotiation of 5G MBS service with AF, including QoS, 5G MBS service area.

FIG. 2 is a schematic diagram of a network architecture according to an embodiment of the present disclosure. As shown in FIG. 2, the network architecture provided in this embodiment includes: UE, next-generation access network NG-RAN, multicast/broadcast user plane function (MB-UPF) network element, multicast-access and mobility management function (M-AMF) network element, multicast/broadcast session management function (MB-SMF) network element, multicast/broadcast service function (MBSF) network element, multicast/broadcast service user plane (MBSU) network element, NEF network element and application.

The UE, the NG-RAN, and the M-AMF in the embodiments of the present disclosure all support the MBS service. The MB-SMF network element and the MB-UPF network element are new functional network elements in the 5G system. The MBSF network element is a new functional network element, which is used to handle signalling part to cater for the service layer capability in the Transport-Only and the Full Service Mode. The MBSF network element also provides an interface to the Application Server or content provider in the Transport Only mode. The MBSU network element is also a new functional network element for handling the payload part to cater for the service layer capability.

The embodiments of the present disclosure include existing interfaces and new interfaces. As shown in FIG. 2, the main interfaces include: Uu interface between UE and NG-RAN, N2 interface (which can be used for handling MBS sessions) between NG-RAN and M-AMF, MB-N3 interface between NG-RAN and MB-UPF, Nx interface between MB-SMF and MB-UPF, Ny interface between MBSF and MBSU (the Ny interface is a new interface used to provide service layer functions in Full Service Mode), N6MB_C interface between MB-SMF and MBSF (this N6MB_C interface is a new interface for implementing NF services), NxMB_C interface between MBSF and NEF (this NxMB_C interface is a new interface for implementing NF services), NxMB_U interface between MBSU and NEF (this NxMB_U interface is a new interface), and N6 interface between MB-UPF and MBSU (the N6 interface supports MBS user plane).

Each network element in FIG. 1 and FIG. 2 may be a network element in a hardware device, or a software function running on dedicated hardware, or a virtualized function instantiated on a platform (e.g., a cloud platform). It should be noted that, in the above-mentioned network architecture shown in FIG. 1 or FIG. 2, the network elements included in the entire network architecture are merely illustrated. In the embodiments of the present disclosure, the network elements included in the entire network architecture are not limited to those in the figures.

At present, the existing 5G network system temporarily does not support the transmission of MBS sessions. The embodiment of the present disclosure propose a session processing method, which is mainly aimed at the MBS sessions in the 5G network and realizes effective utilization of MBS session resources. After an MBS session is established, the MBS session will occupy a lot of network resources and interface channels, causing waste of network resources and interface channels. With the methods provided by the embodiments of the present disclosure, when no UE is interested in the MBS session, the system can suspend the MBS session which is in an active state, release resources related to the MBS session, but still keep MBS context information; when MBS data arrives or when a UE is interested in the MBS session, the system can resume or reactivate the MBS session, and can also reallocate resources for the MBS session. According to the above implementations, network resources can be effectively utilized, waste of network resources can be avoided, and system communication quality can be improved.

Hereinafter, the technical solutions in the present disclosure will be described in detail through example embodiments. It should be noted that the following embodiments may exist independently or may be combined with each other. For the same or similar contents, for example, the explanations of terms or nouns, and the explanations of steps, etc., reference can be made to different embodiments, and the explanations will not be repeated.

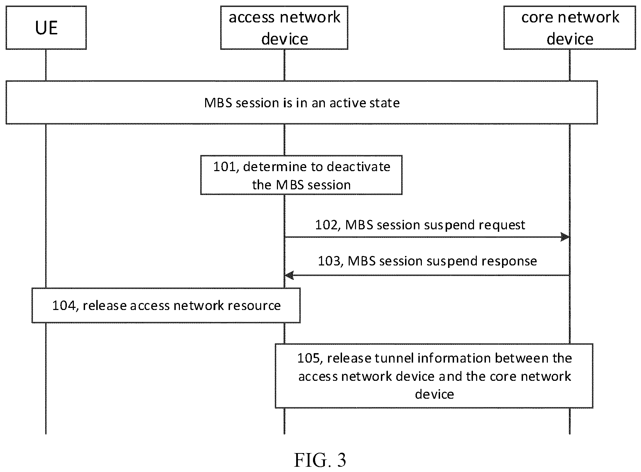

With reference to the session processing methods shown in the embodiments of FIG. 3 to FIG. 6, the technical solutions of how to deactivate an MBS session in an active state in a communication system will be described in detail.

FIG. 3 is an interaction diagram of a session processing method according to an embodiment of the present disclosure. As shown in FIG. 3, the method provided by this embodiment includes the following steps:

In step 101, an access network device determines to deactivate an MBS session.

When the MBS session is in an active state, the access network device detects the MBS session, and if there is no data transmission on the active MBS session, or no UE receives the MBS session, the access network device determines to deactivate the MBS session.

In step 102, the access network device sends an MBS session suspend request to a core network device.

In some embodiments of the present disclosure, the MBS session suspend request includes at least one of identity information of the MBS session, a suspend cause, and an operation type. The identity information of the MBS session is used to uniquely determine the MBS session, and the identity of the MBS session may be represented by an ID or a character string of the MBS session. The suspend cause includes that no data transmission exists on the MBS session, or that no UE receives the MBS session. The operation type is used to indicate whether to release tunnel information (tunnel info, or channel information) between the core network device and the access network device. That is, the access network device can indicate the core network device to release or keep the tunnel information between the core network device and the access network device through the MBS session suspend request.

In step 103, the access network device receives an MBS session suspend response from the core network device. The MBS session suspend response is used to notify the access network device that the core network device has received the MBS session suspend request.

In step 104, the access network device releases an access network resource for the MBS session. The access network resource may be understood as an air interface resource allocated by the access network device for the MBS session, including at least one time domain resource and at least one frequency domain resource.

As an example, the access network device may store context information for the deactivated MBS session (i.e., the suspended MBS session). The context information includes NGAP-related context information, MBS context, and PDU session context information necessary for resuming the MBS session. The NGAP refers to an interface protocol between the access network and the core network, that is, the NG interface application protocol. Exemplarily, the context information for the deactivated MBS session saved by the access network device Node B may further include QoS flow information, session type information (IP type or Ethernet type),or security-related information.

According to some embodiments, the core network device may also store the context information for the deactivated MBS session according to indication of the MBS session suspend request of the access network device. For example, the AMF network element and the SMF network element in the core network may save the context information for the deactivated MBS session.

As an example, after the access network device receives the MBS session suspend response from the core network device, the method may further include the following step:
In step 105, the access network device releases the tunnel information between the access network device and the core network device.

In the embodiment of the present disclosure, releasing the tunnel information between the access network device and the core network device refers to releasing the tunnel information between the access network device and the UPF network element in the core network. It should be noted that, the execution sequence of the foregoing steps 104 and 105 is not limited to the execution sequence shown in FIG. 3, and the two steps may also be executed simultaneously, and embodiments of the present disclosure do not impose specific limitations on this.

The session processing method provided by the embodiments of the present disclosure involves a process of deactivating an MBS session. The access network device determines to deactivate the MBS session, and sends an MBS session suspend request to the core network device to indicate the core network device to suspend the MBS session. The core network device sends an MBS session suspend response to the access network device. The access network device can release the air interface resource for the MBS session and the tunnel information between the access network device and the core network device. The above process of deactivating the MBS session can effectively utilize network resources, avoid waste of network resources, and improve system communication quality.

Optionally, in some embodiments, step 102 includes: the access network device sends an MBS session suspend request to the Session Management Function (SMF) network element. Correspondingly, step 103 includes: the access network device receives the MBS session suspend response from the SMF network element. In this example, when the access network device determines to suspend the MBS session, it sends an MBS session suspend request to the SMF network element of the core network, so that the SMF network element performs an MBS session modification process according to the MBS session suspend request. The specific process can be clear from the examples below.

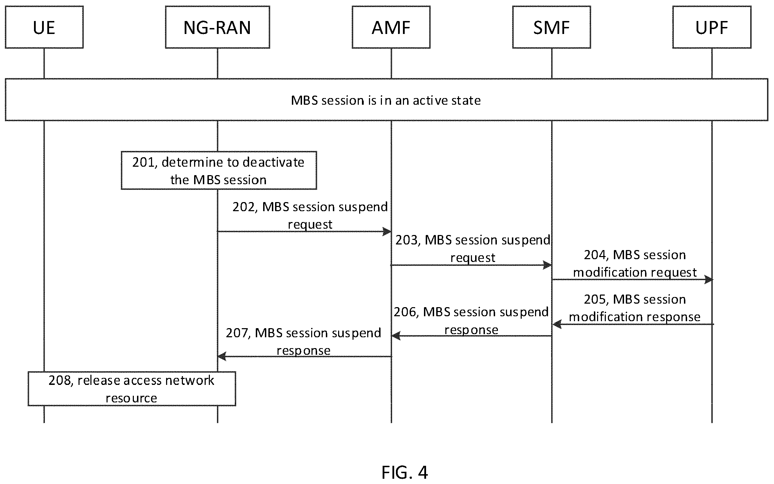

The embodiment shown in FIG. 3 will be described in detail below with reference to a specific example. FIG. 4 is an interaction diagram of a session processing method according to an embodiment of the present disclosure. FIG. 4 uses NG-RAN as the access network device. The NG-RAN is composed of a group of gNBs connected to the 5G core network through the NG interface. The core network device includes the AMF network element, the SMF network element, and the UPF network element. As shown in FIG. 4, the method provided by this embodiment includes the following steps:
In step 201, the access network device determines to deactivate the MBS session. The manner in which the access network device determines to deactivate the MBS session is the same as that in the foregoing embodiments, and reference may be made to the foregoing embodiments for details.
In step 202, the access network device sends an MBS session suspend request to the AMF network element.
In step 203, the AMF network element forwards the MBS session suspend request to the SMF network element.

In the embodiment of the present disclosure, the access network device sends the MBS session suspend request to the SMF network element through the AMF network element. Specifically, the MBS session suspend request includes at least one of identity information of the MBS session, a suspend cause, and an operation type. Details can be found the above embodiments and repeated descriptions are omitted here.

Optionally, the MBS session suspend request may be used to indicate the SMF network element to update the context information for the MBS session management SM.

In step 204, the SMF network element sends an MBS session modification request to the UPF network element.

In the embodiment of the present disclosure, the SMF network element initiates the MBS session modification procedure according to the indication of the MBS session suspend request. The MBS session modification request is used to indicate whether the UPF network element releases the tunnel information between the access network device and the UPF network element.

Optionally, in some embodiments, when the MBS session is suspended, the tunnel information between the access network device and the UPF network element may also be kept. It should be noted that even if the tunnel information between the access network and the UPF network element is kept, the SMF network element also needs to send an MBS session modification request to the UPF network element, so that the UPF network element knows that the MBS session is suspended and the UPF network element does not send data to the UE, thereby reducing the power consumption of the UPF network element. This example keeps the tunnel information between the access network device and the UPF network element. When the MBS session transitions from the deactivated state to the active state, the access network device does not need to reallocate the tunnel information, and can directly establish the MBS session based on the kept tunnel information..

In step 205, the UPF network element sends an MBS session modification response to the SMF network element.

The MBS session modification response is used to indicate that the UPF network element has received the MBS session modification request.

In step 206, the SMF network element sends an MBS session suspend response to the AMF network element.

In step 207, the AMF forwards the MBS session suspend response to the access network device.

The MBS session suspend response is used to indicate the access network device that the MBS session has been suspended.

In step 208, the access network device releases the access network resource for the MBS session.

In embodiments of the present disclosure, the access network device determines whether to release or keep access network resources, and whether to release or keep tunnel information between the access network device and the UPF network element. If the tunnel information is released, indication information indicating release of the tunnel information can be carried in the MBS session suspend request, so that the SMF network element initiates the session modification process according to the MBS session suspend request, and informs the UPF network element to release the tunnel information between the access network device and the UPF network element.

In the embodiments of the present disclosure, when the access network device determines to deactivate the MBS session, it sends the MBS session suspend request to the SMF network element through the AMF network element, indicating the SMF network element to suspend the MBS session. The SMF network element can also send an MBS session modification request to the UPF network element according to indication of the access network device, so that the UPF network element releases the tunnel information between the UPF network element and the access network device. When the MBS session is suspended, the access network device can also release the air interface resource for the MBS session. The above process of deactivating the MBS session can effectively utilize network resources, avoid waste of network resources, and improve system communication quality.

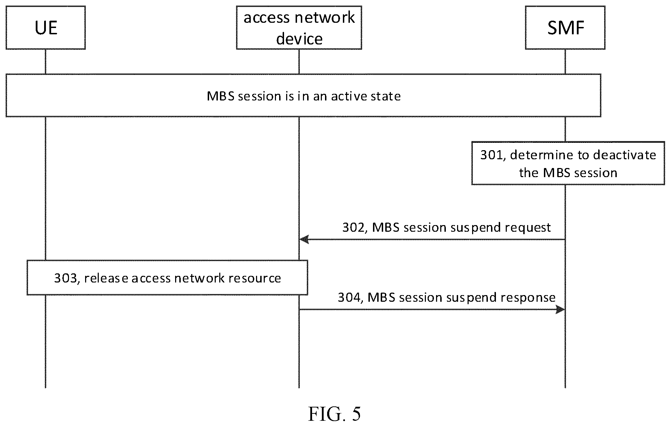

FIG. 5 is an interaction diagram of a session processing method according to an embodiment of the present disclosure. As shown in FIG. 5, the method provided by this embodiment includes the following steps:
In step 301, the SMF network element determines to deactivate an MBS session.

In this embodiment of the present disclosure, when the MBS session is in an active state, the SMF network element may determine to deactivate the MBS session according to received indication information, or determine to deactivate the MBS session according to local policy configuration information.

As an example, the SMF network element determines to deactivate the MBS session according to the received indication information. The indication information received by the SMF network element may include at least one of the following: indication information sent by the access network device; indication information sent by the Access and Mobility Management Function (AMF) network element; and indication information sent by the UPF network element.

The above indication information is used to indicate that there is no data transmission on the MBS session which is in an active state, or that no UE receives the MBS session. The SMF network element determines to initiate the MBS session suspension process according to the indication information.

As another example, when the SMF network element detects that there is no data transmission on the MBS session which is in an active state, or no UE receives the MBS session, it may determine to deactivate the MBS session and initiate the MBS session suspend procedure. Optionally, if there is no active PDU session or no PDU session related to the multicast broadcast service, the SMF network element may determine to deactivate the MBS session.

The difference between the embodiment in FIG. 5 and the embodiments shown in FIG. 3 and FIG. 4 is that it is the SMF network element that initiates the MBS session suspend process. The SMF network element may determine whether to initiate an MBS session process according to the indication information sent by the access network device or other core network element, or the SMF network element may directly determine whether to initiate an MBS session process through detection.

In step 302, the SMF network element sends an MBS session suspend request to the access network device.

The MBS session suspend request includes at least one of identity information of the MBS session, a suspend cause, and an operation type. Details may be found in the above description regarding step 102 in the embodiment of FIG. 3.

In step 303, the access network device releases an access network resource.

As an example, after receiving the MBS session suspend request, the access network device releases the access network resource according to the indication of the MBS session suspend request. As another example, when the access network device receives the MBS session suspend request, the access network device determines whether to release the access network resource.

In step 304, the SMF network element receives the MBS session suspend response from the access network device. The MBS session suspend response is used to notify the SMF network element that the access network device has received the MBS session suspend request.

It should be noted that, in the embodiment of the present disclosure, the access network device receives the MBS session suspend request sent by the SMF network element through the AMF network element, and the access network device sends the MBS session suspend response to the SMF network element through the AMF network element.

As an example, after the SMF network element initiates the MBS session suspend procedure, the SMF network element may store the context information for the deactivated MBS session. Optionally, the access network device may also store the context information for the deactivated MBS session according to the indication of the MBS session suspend request from the SMF network element. As another example, when the access network device receives the MBS session suspend request, the access network device determines whether to store the context information for the deactivated MBS session. If the context information for the deactivated MBS session needs to be stored, the access network device may carry indication information in the MBS session suspend response, where the indication information is used to indicate the SMF network element to store the context information for the deactivated MBS session.

The session processing method provided by the embodiment of the present disclosure involves the deactivation process of the MBS session. The SMF network element determines to deactivate the MBS session, and sends an MBS session suspend request to the access network device to indicate the access network device to suspend the MBS session. The access network device sends an MBS session suspend response to the SMF network element, and the access network device can release the air interface resource for the MBS session and the tunnel information between the access network device and the core network device. The above process of deactivating the MBS session can effectively utilize network resources, avoid waste of network resources, and improve system communication quality.

Optionally, in some embodiments, when the SMF network element determines to deactivate the Multicast Broadcast Service (MBS) session, the method further includes: the SMF network element sending an MBS session modification request to the UPF network element, and the SMF network element receiving an MBS session modification response from the UPF network element. In this example, when the SMF network element determines to suspend the MBS session, the SMF network element sends the MBS session modification request to the UPF network element of the core network, so that the UPF network element releases the tunnel information between the UPF network element and the access network device according to the MBS session modification request. Details of the specific process can be found in the following examples.

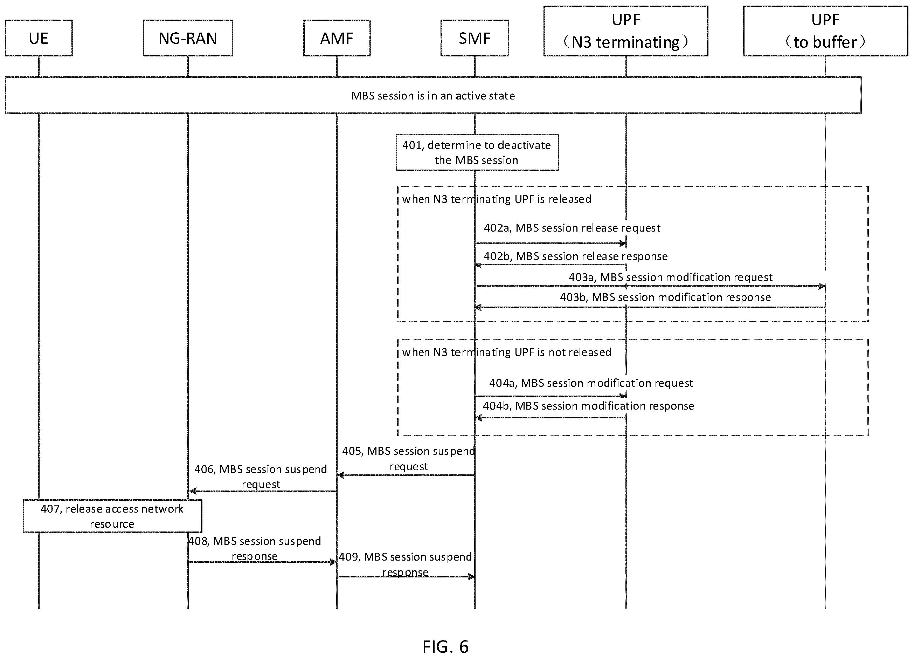

The embodiment shown in FIG. 5 will be described in detail below with reference to an example. FIG. 6 is an interaction diagram of a session processing method according to an embodiment of the present disclosure. FIG. 6 takes the NG-RAN as the access network device and the UPF network element being divided into network elements an example. As shown in FIG. 6, the method provided by this embodiment includes the following steps:

In step 401, the SMF network element determines to deactivate an MBS session.

The manner for the SMF network element in the embodiments of the present disclosure to determine to deactivate the MBS session is the same as the embodiment shown in FIG. 5. For details, reference may be made to the foregoing embodiments, which will not be repeated here.

In the embodiment of the present disclosure, after determining to deactivate the MBS session, the SMF network element may determine whether to release the N3 terminating UPF in FIG. 6, and the specific execution process includes the following two designs.

In a possible design, when the SMF network element determines to release the N3 terminating UPF (i.e., the N3 terminating UPF in FIG. 6), the method may include the following steps:

In step 402a, the SMF network element sends an MBS session release request to the N3 terminating UPF.

In step 402b, the N3 terminating UPF returns an MBS session release response to the SMF network element.

In step 403a, the SMF network element sends an MBS session modification request to the data transmission terminating UPF (that is, the UPF to buffer in FIG. 6).

The above design procedure shows that when the SMF network element determines to deactivate the MBS session, the SMF network element initiates the MBS session release process and the MBS session modification process to the UPF network element. The MBS session release process is used to indicate the UPF network element to release the tunnel information between the UPF network element and the access network device. The MBS session modification process is used to indicate the UPF network element to update the context information for the MBS session.

In step 403b, the data transmission terminating UPF returns an MBS session modification request to the SMF network element.

In a possible design, when the SMF network element determines not to release the N3 terminating UPF, the method may include the following steps:
In step 404a, the SMF network element sends an MBS session modification request to the N3 terminating UPF.
In step 404b, the N3 terminating UPF returns an MBS session modification response to the SMF network element.

The above design process shows that when the SMF network element determines to deactivate the MBS session, the SMF network element initiates the MBS session modification process to the UPF network element. The MBS session modification process may be used to indicate the UPF network element (i.e., the N3 terminating UPF in FIG. 6) to delete N3 tunnel information of a PDU session associated with the MBS session, or indicate to the UPF network element that the N3 tunnel information has been deactivated. In this case, the UPF network element may, according to the indication of the MBS session modification request from the SMF network element, buffer the downlink DL data packets of the PDU session associated with the MBS session, or discard the DL data packets of the PDU session, or forward the DL data packets of the PDU session to the SMF network element (for example, the DL data packets are forwarded through the MBS session modification response).

As an example, in the above-mentioned first possible design, the MBS session release process can also be used to indicate the UPF network element to delete the N3 tunnel information of the PDU session associated with the MBS session, or to indicate to the UPF network element that the N3 tunnel information has been deactivated.

In step 405, the SMF network element sends an MBS session suspend request to the AMF network element.

In step 406, the AMF network element forwards the MBS session suspend request to the access network device.

In step 407, the access network device releases access network resource.

In step 408, the access network device sends an MBS session suspend response to the AMF network element.

In step 409, the AMF network element forwards the MBS session suspend response to the SMF network element.

It should be noted that the execution sequence of step 402a or step 404a and step 405 in this embodiment of the present disclosure is not limited to the execution sequence shown in FIG. 6. After determining to deactivate the MBS session, the SMF network element may perform step 402a (or step 404a) and step 405 simultaneously, or may perform step 402a (or step 404a) and step 405 sequentially, which is not limited in this embodiment of the present disclosure.

In the embodiments of the present disclosure, when the SMF network element determines to deactivate the MBS session, it sends an MBS session suspend request to the access network device through the AMF network element, indicating the access network device to suspend the MBS session. The UPF network element can also releases the tunnel information between the UPF network element and the access network device according to the indication of the SMF network element. When the MBS session is suspended, the access network device can also release the air interface resource for the MBS session. The above process of deactivating the MBS session can effectively utilize network resources, avoid waste of network resources, and improve system communication quality.

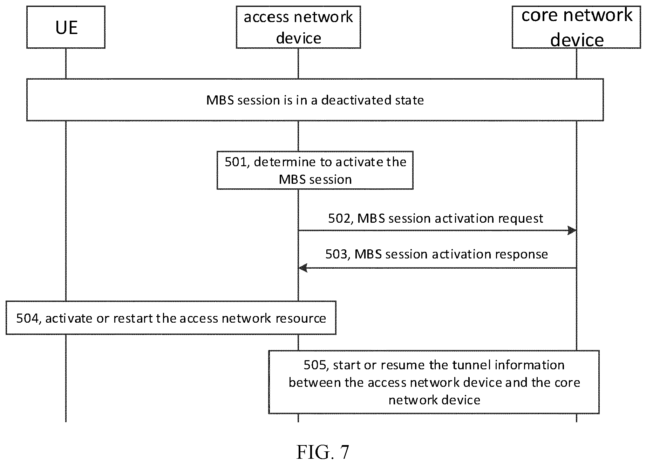

The above-mentioned embodiments illustrate the deactivation process of an MBS session which is in an active state. In these embodiments, the resources related to the deactivated MBS session are released, which can avoid wasting of network resources, and improve the service quality of the communication system. The technical solutions of how to activate an MBS session which is in a deactivated state in the communication system will be described in detail below with reference to the session processing methods shown in the embodiments of FIG. 7 to FIG. 10.

FIG. 7 is an interaction diagram of a session processing method according to an embodiment of the present disclosure. As shown in FIG. 7, the method provided by this embodiment includes the following steps:
In step 501, the access network device determines to activate an MBS session.

In this embodiment of the present disclosure, when an MBS session is in a deactivated state, the access network device may determine to activate the MBS session according to received indication information, or determine to activate the MBS session according to local policy configuration information.

As an example, the access network device determines to activate the MBS session according to the received indication information. The indication information received by the access network device includes at least one of: indication information sent by the UE; indication information sent by the AMF network element; indication information sent by the SMF network element.

The indication information sent by the UE may be RRC information.

The above indication information is used to indicate that there is data transmission on the MBS session which is in the deactivated state, or that a UE joins the MBS session. The access network device determines to initiate the MBS session activation process according to the indication information.

As another example, the access network device detects that there is data transmission on the MBS session which is in the deactivated state, or a UE joins the MBS session, and the access network device may determine to activate the MBS session, and initiate the MBS session activation process.

In step 502, the access network device sends an MBS session activation request to the core network device.

The MBS session activation request includes identity information of the MBS session.

Optionally, as an example, if the access network device releases the tunnel information between the access network device and the UPF network element when deactivating the MBS session, the MBS session activation request sent by the access network device to the core network device may also include tunnel information reallocated by the access network device for the MBS session, that is, the tunnel information between the core network device and the access network device, being used to indicate the core network device to establish a tunnel with the access network device.

In step 503, the core network device sends an MBS session activation response to the access network device. The MBS session activation response is used to indicate that the core network device has received the MBS session activation request.

In step 504, the access network device activates or restarts an access network resource.

If the access network device releases the access network resource when deactivating the MBS session, the access network device needs to reallocate the access network resource for the MBS session. If the access network device does not release the access network resource when deactivating the MBS session, the access network device does not need to allocate new access network resource for the MBS session.

In step 505, the access network device starts or resumes the tunnel information between the access network device and the core network device.

In this embodiment of the present disclosure, starting or resuming the tunnel information between the access network device and the core network device refers to starting or resuming the tunnel information between the access network device and the UPF network element in the core network. It should be noted that, the execution sequence of the foregoing step 504 and step 505 is not limited to the execution sequence shown in FIG. 7, and step 504 and step 505 may also be performed simultaneously, which is not limited in this embodiment of the present disclosure.

The session processing method provided by the embodiment of the present disclosure involves the activation process of the MBS session. The access network device determines to activate the MBS session, and sends an MBS session activation request to the core network device to indicate the core network device to activate the MBS session. The core network device sends the MBS session activation response to the access network device. The access network device activates or restarts the air interface resource for the MBS session and the tunnel information between the access network device and the core network device. The above procedure can realize the rapid establishment of the MBS session which is in the deactivated state, improve the utilization rate of system resources, and improve the communication quality of the system.

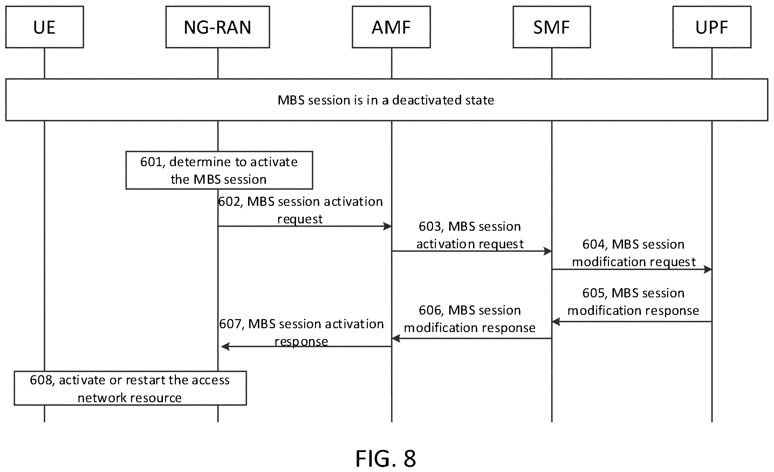

The embodiment shown in FIG. 7 will be described in detail below with reference to an example. FIG. 8 is an interaction diagram of a session processing method according to an embodiment of the present disclosure. FIG. 8 uses NG-RAN as the access network device, and the core network device includes the AMF network element, the SMF network element and the UPF network element. As shown in FIG. 8, the method provided by this embodiment includes the following steps:
In step 601, the access network device determines to activate an MBS session. The manner for the access network device to determine to activate the MBS session is the same as that in the foregoing embodiments, and reference may be made to the foregoing embodiments for details.
In step 602, the access network device sends an MBS session activation request to the AMF network element.
In step 603, the AMF network element forwards the MBS session activation request to the SMF network element.

In the embodiment of the present disclosure, the access network device sends the MBS session activation request to the SMF network element through the AMF network element. Specifically, the MBS session activation request includes identity information of the MBS session, and may also include tunnel information (which may be tunnel information reallocated by the access network device) between the UPF network element in the core network and the access network device.

In step 604, the SMF network element sends an MBS session modification request to the UPF network element.

Optionally, the MBS session modification request includes tunnel information between the UPF network element in the core network and the access network device, which is used to indicate the UPF network element to establish a tunnel with the access network device.

In step 605, the UPF network element sends an MBS session modification response to the SMF network element. The MBS session modification response may be used to indicate that the UPF network element has received the MBS session modification response.

In step 606, the SMF network element sends an MBS session activation response to the AMF network element.

In step 607, the AMF network element forwards the MBS session activation response to the access network device. The MBS session activation response is used to indicate that the SMF network element has received the MBS session activation request.

In step 608, the access network device activates or restarts the access network resource.

In this embodiment of the present disclosure, when determining to activate the MBS session, the access network device sends the MBS session activation request to the SMF network element through the AMF network element, indicating the SMF network element to activate the MBS session. The SMF network element may further initiate the MBS session modification process according to the MBS session activation request, and send the MBS session modification request to the UPF network element, so that the UPF network element reestablishes the tunnel with the access network device. When the MBS session is activated, the access network device restarts or activates the air interface resource for the MBS session. The above procedure can realize the rapid establishment of the MBS session which is in the deactivated state, improve the utilization rate of system resources, and improve the communication quality of the system.

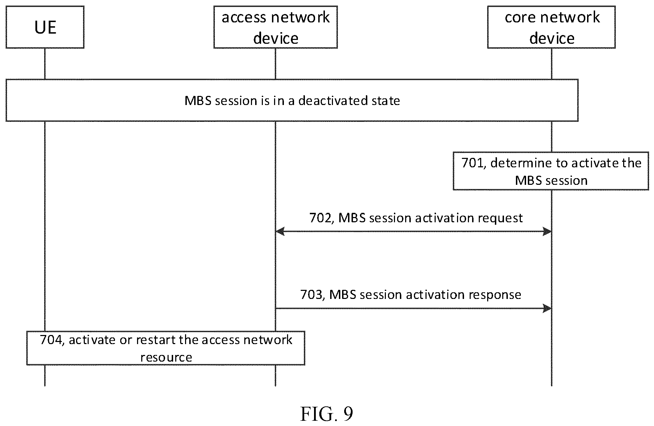

FIG. 9 is an interaction diagram of a session processing method according to an embodiment of the present disclosure. As shown in FIG. 9, the method provided by this embodiment includes the following steps:
In step 701, the SMF network element determines to activate the MBS session.

In this embodiment of the present disclosure, when the MBS session is in a deactivated state, the SMF network element may determine to activate the MBS session according to received indication information, or determine to activate the MBS session according to local policy configuration information.

As an example, the SMF network element determines to activate the MBS session according to the received indication information. The indication information received by the SMF network element includes at least one of: indication information sent by the UE; indication information sent by the access network device; indication information sent by the AMF network element; and indication information sent by the UPF network element.

The indication information sent by the UE may be carried in NAS signaling, such as PDU session establishment. The indication information sent by the access network device may include information about the UE and MBS session information. The AMF network element may receive indication information (such as a service request message) from a NAS message sent by the UE, or receive indication information from an N2 message sent by a base station. The PDU network element may receive indication information from a base station (e.g., Node B) or a UE.

The above-mentioned indication information is used to indicate that there is data transmission on the MBS session which is in the deactivated state, or that a UE joins the MBS. The SMF network element determines to initiate the MBS session activation process according to the indication information.

As another example, the SMF network element detects that there is data transmission on the MBS session which is in the deactivated state, or a UE accesses the MBS session, and the SMF network element determines to activate the MBS session, and initiates the MBS session activation process.

In step 702, the SMF network element sends an MBS session activation request to the access network device.

The MBS session activation request includes identity information of the MBS session.

In step 703, the access network device sends an MBS session activation response to the SMF network element. The MBS session activation response is used to indicate that the access network device has received the MBS session activation request.

In step 704, the access network device activates or restarts the access network resource.

Specifically, if the access network device releases the access network resource when deactivating the MBS session, the access network device needs to reallocate the access network resource for the MBS session. If the access network device does not release the access network resources when deactivating the MBS session, the access network device does not need to allocate new access network resource for the MBS session.

Optionally, if the access network device releases the tunnel information between the access network device and the UPF network element in the core network when deactivating the MBS session, the access network device may reconfigure the tunnel information and carry the tunnel information in the MBS session activation response, so that the SMF network element initiates the MBS session modification process to inform the UPF network element of the reconfigured tunnel information. That is, the MBS session activation response in this embodiment may include tunnel information reallocated by the access network device for the MBS session.

It should be noted that, this embodiment of the present disclosure does not limit the execution order of step 703 and step 704.

The session processing method provided by the embodiment of the present disclosure involves the activation process of the MBS session. The SMF network element determines to activate the MBS session, and sends an MBS session activation request to the access network device to indicate the access network device to activate the MBS session. The access network device sends the MBS session activation response to the SMF network element, and the access network device activates or restarts the air interface resource for the MBS session and the tunnel information between the access network device and the UPF network element in the core network. The above process can realize the rapid establishment of the MBS session which is in the deactivated state, improve the utilization rate of system resources, and improve the communication quality of the system.

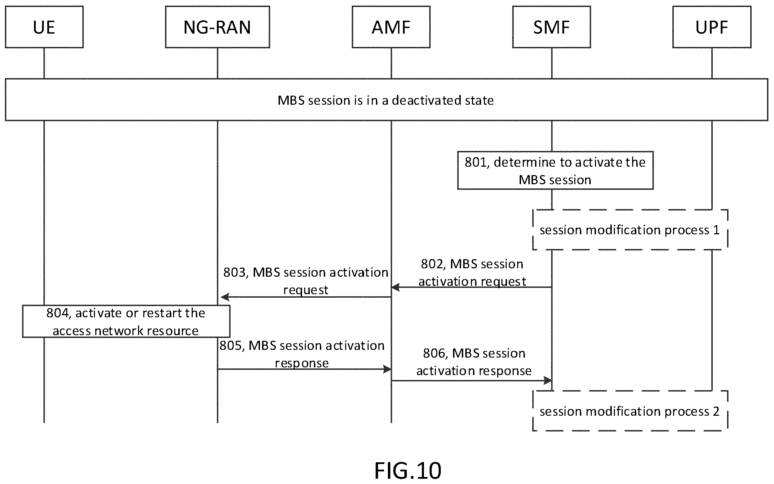

The embodiment shown in FIG. 9 will be described in detail below with reference to an example. FIG. 10 is an interaction diagram of a session processing method according to an embodiment of the present disclosure. FIG. 10 uses NG-RAN as the access network device, and the core network device includes the AMF network element, the SMF network element, and the UPF network element. As shown in FIG. 10, the method provided by this embodiment includes the following steps:
In step 801, the SMF network element determines to activate an MBS session.

The manner for the SMF network element in the embodiment of the present disclosure determines to deactivate the MBS session is the same as the embodiments shown in FIG. 9. For details, reference may be made to the foregoing embodiments, and details are not repeated here.

In step 802, the SMF network element sends an MBS session activation request to the AMF network element.

In step 803, the AMF network element forwards the MBS session activation request to the access network device.

In step 804, the access network device activates or restarts the access network resource.

In step 805, the access network device sends an MBS session activation response to the AMF network element.

In step 806, the AMF network element forwards the MBS session activation response to the SMF network element.

In the embodiment of the present disclosure, when the SMF network element determines to activate the MBS session, it may initiate a session modification process. As shown in FIG. 10, the session modification process includes the following two execution modes:
In a possible design, for the activated MBS session, if the UPF network element does not release the tunnel information between the UPF network element and the access network device during the deactivation process, when the SMF network element determines to activate the MBS session, the SMF network element directly initiates the MBS session modification process 1 shown in FIG. 10. The UPF network element starts or resumes the tunnel information with the core network device according to the MBS session modification request.

In another possible design, for the activated MBS session, if the UPF network element has released the tunnel information between the UPF network element and the access network device during the deactivation process, the SMF network element can initiate the MBS session modification process 2 in FIG. 10 after receiving the MBS session activation response from the access network device. In this design, the access network device reconfigures the tunnel information for the reactivated MBS session, and carries the tunnel information in the MBS session activation response, so that the SMF network element sends the session modification request to the UPF network element according to the MBS session activation response. The UPF network element establishes a tunnel with the core network device according to the MBS session modification request.

Specifically, the session modification process 1 includes the following two steps: the SMF network element sends the MBS session modification request to the UPF network element, and the MBS session modification request is used to indicate the UPF network element to start or resume the tunnel information with the access network device; the SMF network element receives the MBS session modification response from the UPF network element.

Specifically, the session modification process 2 includes the following two steps: the SMF network element sends the MBS session modification request to the UPF network element, and the MBS session modification request includes the tunnel information of the tunnel between the UPF network element and the access network device which is reconfigured by the access network device; the SMF network element receives the MBS session modification response from the UPF network element.

The session processing method provided by the embodiment of the present disclosure involves the activation process of the MBS session. The SMF network element determines to activate the MBS session, and sends the MBS session activation request to the access network device through the SMF network element, indicating the access network device to activate the MBS session. The access network device sends the MBS session activation response to the SMF network element through the AMF network element, and the access network device activates or restarts the air interface resource for the MBS session and the tunnel information between the access network device and the UPF network element in the core network. The above process can realize the rapid establishment of the MBS session which is in the deactivated state, improve the utilization rate of system resources, and improve the communication quality of the system.

The session processing methods provided by the embodiments of the present disclosure are described in detail above, and the access network device and the session management device provided by the embodiments of the present disclosure will be described below.

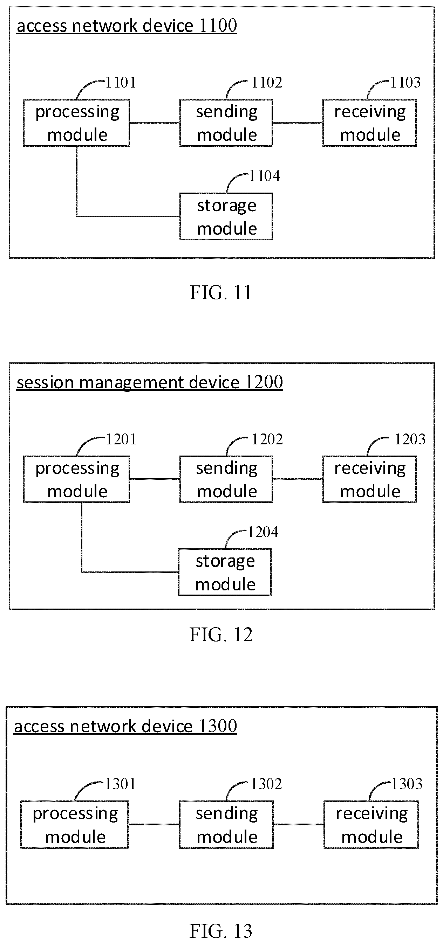

FIG. 11 is a schematic structural diagram of an access network device according to an embodiment of the present disclosure. As shown in FIG. 11, the access network device 1100 provided by the embodiment includes a processing module 1101, a sending module 1102 and a receiving module 1103.

The processing module 1101 is configured to determine to deactivate a Multicast Broadcast Service (MBS) session. The sending module 1102 is configured to send an MBS session suspend request to a core network device. The receiving module 1103 is configured to receive an MBS session suspend response from the core network device.

According to some embodiments, the processing module 1101 is configured to:
in response to no data transmission on the MBS session in an active state or no UE receiving the MBS session, determine to deactivate the MBS session.

According to some embodiments, the MBS session suspend request includes at least one of identity information of the MBS session, a suspend cause and an operation type, and the operation type is used to indicate whether to release tunnel information between the core network device and the access network device.

According to some embodiments, the sending module 1102 is configured to:
send the MBS session suspend request to a Session Management Function (SMF) network element;
correspondingly, the receiving module 1103 is configured to:
   receive the MBS session suspend response from the SMF network element.

According to some embodiments, the device 1100 further includes:
a storage module 1104 configured to store context information for the deactivated MBS session.

According to some embodiments, the processing module 1101 is further configured to:
after the receiving module receives the MBS session suspend response from the core network device, release tunnel information between the access network device and the core network device.

The access network device provided in the embodiments of the present disclosure is used to implement the technical solutions performed by the access network device in the method embodiments shown in FIG. 3 or FIG 4, the implementation principle and technical effects thereof are similar, and repeated descriptions are omitted here.

FIG. 12 is a schematic structural diagram of a session management device according to an embodiment of the present disclosure. As shown in FIG. 12, the session management device 1200 provided by this embodiment includes a processing module 1201, a sending module 1202 and a receiving module 1203.

The processing module 1201 is configured to determine to deactivate a Multicast Broadcast Service (MBS) session. The sending module 1202 is configured to send an MBS session suspend request to an access network device. The receiving module 1203 is configured to receive an MBS session suspend response from the access network device.

According to some embodiments, the processing module 1201 is configured to:
determine to deactivate the MBS session according to received indication information;
wherein the indication information is used to indicate that no data transmission exists on the MBS session in an active state, or no UE receives the MBS session.

According to some embodiments, the indication information includes at least one of:
indication information sent by the access network device;
indication information sent by an access and mobility management function (AMF) network element; and
indication information sent by a User Plane Function (UPF) network element.

According to some embodiments, the processing module 1201 is configured to:
in response to no data transmission on the MBS session in an active state or no UE receiving the MBS session, determine to deactivate the MBS session.

According to some embodiments, the MBS session suspend request includes at least one of identity information of the MBS session, a suspend cause and an operation type, and the operation type is used to indicate whether to release tunnel information between a core network device and the access network device.

According to some embodiments, the device 1200 further includes:
a storage module 1204 configured to store context information for the deactivated MBS session.

According to some embodiments, the sending module 1202 is further configured to:
when the processing module determines to deactivate the MBS session, send a session modification request for the MBS session to a User Plane Function (UPF) network element;
the receiving module 1203 is further configured to receive an MBS session modification response from the UPF network element.

The session management device provided in the embodiments of the present disclosure is used to implement the technical solutions performed by the AMF network element in the method embodiments shown in FIG. 5 or FIG 6, the implementation principle and technical effects thereof are similar, and repeated descriptions are omitted here.

FIG. 13 is a schematic structural diagram of an access network device according to an embodiment of the present disclosure. As shown in FIG. 13, the access network device 1300 provided by the embodiment includes a processing module 1301, a sending module 1302 and a receiving module 1303.

The processing module 1301 is configured to determine to activate a Multicast Broadcast Service (MBS) session. The sending module 1302 is configured to send an MBS session activation request to a core network device. The receiving module 1303 is configured to receive an MBS session activation response from the core network device.

According to some embodiments, the processing module 1301 is configured to:
determine to activate the MBS session according to received indication information; and
wherein the indication information is used to indicate that data transmission exists on the MBS session in a deactivated state, or that a UE joins the MBS.

According to some embodiments, the indication information includes at least one of:
indication information sent by the UE;
indication information sent by an access and mobility management function (AMF) network element; and
indication information sent by a Session Management Function (SMF) network element.

According to some embodiments, the MBS session activation request includes identity information of the MBS session.

According to some embodiments, the MBS session activation request further includes tunnel information between the core network device and the access network device.

According to some embodiments, the processing module 1301 is further configured to:
after the receiving module receives the MBS session activation response from the core network device, start or resume tunnel information between the access network device and the core network device.

The access network device provided in the embodiments of the present disclosure is used to implement the technical solutions performed by the access network device in the method embodiments shown in FIG. 7 or FIG 8, the implementation principle and technical effects thereof are similar, and repeated descriptions are omitted here.

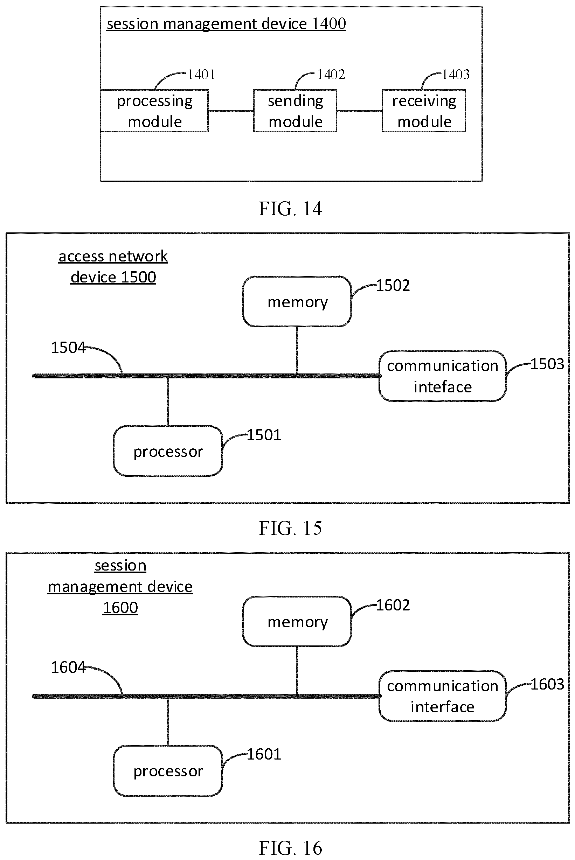

FIG. 14 is a schematic structural diagram of a session management device according to an embodiment of the present disclosure. As shown in FIG. 14, the session management device 1400 provided by this embodiment includes a processing module 1401, a sending module 1402 and a receiving module 1403.

The processing module 1401 is configured to determine to activate a Multicast Broadcast Service (MBS) session. The sending module 1402 is configured to send an MBS session activation request to an access network device. The receiving module 1403 is configured to receive an MBS session activation response from the access network device.

According to some embodiments, the processing module 1401 is configured to:
determine to activate the MBS session according to received indication information; and
wherein the indication information is used to indicate that data transmission exists on the MBS session in a deactivated state, or that a UE joins the MBS.

According to some embodiments, the indication information includes at least one of:
indication information sent by the UE;
indication information sent by the access network device;
indication information sent by an access and mobility management function (AMF) network element; and
indication information sent by a User Plane Function (UPF) network element.

According to some embodiments, the MBS session activation request includes identity information of the MBS session.

According to some embodiments, the sending module 1402 is further configured to send a modification request for the MBS session to a User Plane Function (UPF) network element, wherein the modification request for the MBS session is used to indicate the UPF network element to start or resume tunnel information between the UPF network element and the access network device; and
the receiving module 1403 is further configured to receive an MBS session modification response from the UPF network element.

According to some embodiments, the MBS session activation response includes tunnel information reallocated by the access network device for the MBS session.

The session management device provided in the embodiments of the present disclosure is used to implement the technical solutions performed by the AMF network element in the method embodiments shown in FIG. 9 or FIG 10, the implementation principle and technical effects thereof are similar, and repeated descriptions are omitted here.

It should be noted and understood that the above division of modules of the terminal device or network device is only a division of logical functions, and the functions may be fully or partially integrated into one physical entity or physically separated entities in actual implementation. These modules can all be implemented in the form of software calling by a processing element; or, these modules may be implemented in hardware; or, some modules may be implemented in the form of calling software by a processing element, and some modules may be implemented in hardware. For example, the processing module may be an independently provided processing element, or may be integrated into a certain chip of the above-mentioned devices. In addition, it may also be stored in a memory of the above-mentioned devices in the form of program codes, and a certain processing element of the above-mentioned devices call and execute the functions of the above determination module. The implementation of other modules is similar. In addition, all or part of these modules may be integrated together, or may be implemented independently. The processing element described here may be an integrated circuit with signal processing capability. In the implementations, each step of the above-mentioned methods or each of the above-mentioned modules may be completed by an integrated logic circuit of hardware in the processor element or an instruction in the form of software.

For example, the above modules may be one or more integrated circuits configured to implement the above methods, such as: one or more Application Specific Integrated Circuits (ASICs), or one or more Digital Signal Processors (DSPs), or one or more Field Programmable Gate Arrays (FPGA), etc. For another example, when one of the above modules is implemented by a processing element call program codes, the processing element may be a general-purpose processor, such as a Central Processing Unit (CPU) or other processors that can invoke or call program codes. For another example, these modules can be integrated together and implemented in the form of a system-on-a-chip (SOC).

The above-mentioned embodiments may be implemented in whole or in part by software, hardware, firmware or any combination thereof. When implemented in software, the embodiments can be implemented in whole or in part in the form of a computer program product. The computer program product includes one or more computer instructions. When the computer program instructions are loaded and executed on a computer, all or part of the processes or functions described in the embodiments of the present disclosure are produced. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from a website, computer, server, or data center to another website, computer, server, or data center in a wired manner (e.g., via coaxial cable, optical fiber, Digital Subscriber Line (DSL)) or in a wireless manner (e.g., via infrared, wireless, microwave, etc.). The computer-readable storage medium may be any available medium that can be accessed by a computer or a data storage device such as a server, data center, etc. that includes an integration of one or more available medium. The available medium may be magnetic medium (e.g., floppy disks, hard disks, magnetic tapes), optical medium (e.g., Digital Video Disc (DVD)), or semiconductor medium (e.g., Solid State Disk (SSD)), and so on.

FIG. 15 is a schematic diagram of a hardware structure of an access network device according to an embodiment of the present disclosure. As shown in FIG. 15, the access network device 1500 in this embodiment may include: a processor 1501, a memory 1502 and a communication interface 1503. The memory 1502 is configured to store computer programs; the processor 1501 is configured to execute the computer programs stored in the memory 1502 to implement the methods performed by the access network device in any of the above method embodiments. The communication interface 1503 is configured for data communication or signal communication with a functional network element.

Optionally, the memory 1502 may be independent or integrated with the processor 1501. When the memory 1502 is a device independent of the processor 1501, the access network device 1500 may further include: a bus 1504 for connecting the memory 1502 and the processor 1501.

In a possible implementation manner, the processing module 1101 in FIG. 11 may be integrated and implemented in the processor 1501, and the sending module 1102 and the receiving module 1103 may be integrated and implemented in the communication interface 1503. The processing module 1301 in FIG. 13 may be integrated and implemented in the processor 1501, and the sending module 1302 and the receiving module 1303 may be integrated and implemented in the communication interface 1503. In a possible implementation, the processor 1501 may be configured to implement the signal processing operations of the access network device in the above method embodiments, and the communication interface 1503 may be configured to implement the signal transceiving operations of the access network device in the above method embodiments.

The access network device provided in the embodiments can be used to execute the methods performed by the access network device in any of the above method embodiments, and the implementation principle and technical effect are similar, and details are not repeated here.

An embodiment of the present disclosure further provides a session management device. The session management device may be an AMF network element. FIG. 16 is a schematic structural diagram of a session management device according to an embodiment of the present disclosure. As shown in FIG. 16, the session management device 1600 in this embodiment includes: a processor 1601, a memory 1602 and a communication interface 1603. The memory 1602 is configured to store computer programs; the processor 1601 is configured to execute the computer programs stored in the memory 1602 to implement the methods performed by the SMF network element in any of the above method embodiments. The communication interface 1603 is used for data communication or signal communication with the access network device or other functional network element.

Optionally, the memory 1602 may be independent or integrated with the processor 1601. When the memory 1602 is a device independent of the processor 1601, the session management device 1600 may further include: a bus 1604 for connecting the memory 1602 and the processor 1601.

In a possible implementation, the processing module 1201 in FIG. 12 may be integrated and implemented in the processor 1601, and the sending module 1202 and the receiving module 1203 may be integrated and implemented in the communication interface 1603. The processing module 1401 in FIG. 14 may be integrated and implemented in the processor 1601, and the sending module 1402 and the receiving module 1403 may be integrated and implemented in the communication interface 1603. In a possible implementation, the processor 1601 may be configured to implement the signal processing operations of the SMF network element in any of the above method embodiments, and the communication interface 1603 may be configured to implement the signal transceiving operation of the SMF network element in any one of the above method embodiments.

The session management device provided in the embodiments may be used to execute the methods performed by the AMF network element in any of the above method embodiments, and implementation principle and technical effect are similar, and details are not repeated here.

An embodiment of the present disclosure further provides a computer-readable storage medium. Computer-executable instructions are stored in the computer-readable storage medium. When the computer-executable instructions are executed by a processor, the processor is caused to implement the technical solutions of the access network device in any one of the above method embodiments.

An embodiment of the present disclosure further provides a computer-readable storage medium. Computer-executable instructions are stored in the computer-readable storage medium. When the computer-executable instructions are executed by a processor, the processor is caused to implement the technical solutions of the AMF network element in any one of the above method embodiments.

An embodiment of the present disclosure further provides a program. When the program is executed by a processor, the processor is caused to perform the technical solutions of the access network device in any one of the foregoing method embodiments.

An embodiment of the present disclosure further provides a program. When the program is executed by a processor, the processor is caused to perform the technical solutions of the AMF network element in any one of the foregoing method embodiments.

An embodiment of the present disclosure further provides a computer program product, including program instructions. The program instructions are configured to implement the technical solutions of the access network device in any one of the foregoing method embodiments.

An embodiment of the present disclosure further provides a computer program product, including program instructions. The program instructions are configured to implement the technical solutions of the AMF network element in any one of the foregoing method embodiments.

An embodiment of the present disclosure further provides a chip, including: a processing module and a communication interface. The processing module may implement the technical solutions of the access network device in the foregoing method embodiments. In addition, the chip further includes a storage module (e.g., memory). The storage module is configured to store instructions, and the processing module configured to execute the instructions stored in the storage module, and the execution of the instructions stored in the storage module causes the processing module to implement the technical solutions of the access network device.

An embodiment of the present disclosure further provides a chip, including: a processing module and a communication interface. The processing module may implement the technical solutions of the AMF network element in the foregoing method embodiments. In addition, the chip further includes a storage module (e.g., memory). The storage module is configured to store instructions, and the processing module configured to execute the instructions stored in the storage module, and the execution of the instructions stored in the storage module causes the processing module to implement the technical solutions of the AMF network element.

In embodiments of the present disclosure, "at least two" means two or more, and "a plurality" means two or more. The term "and/or" describes an association relationship of associated objects, indicating that there can be three kinds of relationships. For example, A and/or B can indicate: A alone, B alone, and A and B together. A and B can be singular or plural. The character "/" generally indicates that the related objects before and after "/" are an "or" relationship. In a formula, the character "/" indicates that the related objects are in a "division" relationship. The expression "at least one of the following items" or similar expressions refer to any combination of these items, including any combination of single item(s) or plural items(s). For example, at least one a, b or c can mean: a; b; c; a and b; a and c; b and c; or, a and b and c, where a, b, c can be single or plural.

It can be understood that, the various numeral numbers in the embodiments of the present disclosure are only for the convenience of description, and are not used to limit the scope of the embodiments of the present disclosure.

It can be understood that, in the embodiments of the present disclosure, the sequence numbers of the above-mentioned processes do not imply the order of execution, and the execution order of each process should be determined by its functions and internal logic, and these sequence numbers should not be construed as any limitation on the implementation of the present disclosure.

## Claims

1. A session processing method, comprising:
determining (301), by a Multicast Broadcast (MB)-Session Management Function (SMF) network element, to deactivate a Multicast Broadcast Service (MBS) session, and sending, via an Access and Mobility management Function (AMF) network element, an MBS session suspend request to an access network device; and
receiving (304), by the MB-SMF network element, an MBS session suspend response from the access network device,
wherein the SMF stores context information for the deactivated MBS session;
wherein determining, by the MB-SMF network element, to deactivate the MBS session comprises:
determining, by the MB-SMF network element, to deactivate the MBS session according to received indication information;
wherein the indication information is used to indicate that no data transmission exists on the MBS session in an active state.

2. The method according to claim 1, wherein the indication information received by the MB-SMF network element comprises at least one of:
indication information sent by the access network device;
indication information sent by the AMF network element; and
indication information sent by a User Plane Function (UPF) network element.

3. The method according to any one of claims 1 to 2, wherein the MBS session suspend request comprises at least one of identity information of the MBS session, a suspend cause and an operation type, and the operation type is used to indicate whether to release tunnel information between a core network device and the access network device.

4. The method according to claim 1, wherein when the access network device receives the MBS session suspend request, the access network device determines whether to store the context information for the deactivated MBS session, if the context information for the deactivated MBS session needs to be stored, the access network device carries indication information in the MBS session suspend response, where the indication information is used to indicate the SMF to store the context information for the deactivated MBS session.

5. A session processing method, comprising:
determining, by a Multicast Broadcast (MB)-Session Management Function (SMF) network element, to activate a deactivated Multicast Broadcast Service (MBS) session, and sending an MBS session activation request to an access network device; and
receiving, by the SMF network element, an MBS session activation response from the access network device,
wherein the SMF stores context information for the deactivated MBS session;
wherein determining, by the MB-SMF network device, to activate the MBS session comprises:
determining, by the SMF network device, to activate the MBS session according to received indication information; and
wherein the indication information is used to indicate that data transmission exists on the MBS session in a deactivated state.

6. The method according to claim 5, wherein the MBS session activation request comprises identity information of the MBS session.

7. A Multicast Broadcast (MB)-Session Management Function (SMF) network element, comprising:
a processing module (1201) configured to determine to deactivate a Multicast Broadcast Service (MBS) session;
a sending module (1202) configured to send, via an Access and Mobility management Function (AMF) network element, an MBS session suspend request to an access network device;
a receiving module (1203) configured to receive an MBS session suspend response from the access network device; and
a storage module configured to store context information for the deactivated MBS session;
wherein the processing module (1201) is configured to:
determine to deactivate the MBS session according to received indication information;
wherein the indication information is used to indicate that no data transmission exists on the MBS session in an active state.

8. The MB-SMF network element according to claim 7, wherein the indication information comprises at least one of:
indication information sent by the access network device;
indication information sent by the AMF network element; and
indication information sent by a User Plane Function (UPF) network element.

9. The MB-SMF network element according to any one of claims 7 to 8, wherein the MBS session suspend request comprises at least one of identity information of the MBS session, a suspend cause and an operation type, and the operation type is used to indicate whether to release tunnel information between a core network device and the access network device.

10. A Multicast Broadcast (MB)-Session Management Function (SMF) network element, comprising:
a processing module (1401) configured to determine to activate a deactivated Multicast Broadcast Service (MBS) session;
a sending module (1402) configured to send an MBS session activation request to an access network device;
a receiving module (1403) configured to receive an MBS session activation response from the access network device; and
a storage module configured to store context information for the deactivated MBS session;
wherein the processing module (1401) is configured to:
determine to activate the MBS session according to received indication information; and
wherein the indication information is used to indicate that data transmission exists on the MBS session in a deactivated state.

11. The MB-SMF network element according to claim 10, wherein the MBS session activation request comprises identity information of the MBS session.

12. An access device, comprising:
a module configured to receive, via an Access and Mobility management Function (AMF) network element, an MBS session suspend request from a Multicast Broadcast (MB)-Session Management Function (SMF) network element, wherein the MBS session suspend request is sent in response to that the MB-SMF determines to deactivate a Multicast Broadcast Service (MBS) session; and
a module configured to send an MBS session suspend response to the MB-SMF network element,
wherein the SMF stores context information for the deactivated MBS session,
a module configured to send indication information to the MB-SMF network element, wherein the indication information is used for the MB-SMF network element to determine to deactivate of the MBS session and the indication information is used to indicate that no data transmission exists on the MBS session in an active state.

13. The access device according to claim 12, wherein the MBS session suspend request comprises at least one of identity information of the MBS session, a suspend cause and an operation type, and the operation type is used to indicate whether to release tunnel information between a core network device and the access network device.

14. The access device according to claim 12, further comprising:
a module configured to, when the access network device receives the MBS session suspend request, determine whether to store the context information for the deactivated MBS session, if the context information for the deactivated MBS session needs to be stored, carry indication information in the MBS session suspend response, where the indication information is used to indicate the SMF to store the context information for the deactivated MBS session.

## Patentansprüche

1. Sitzungsverarbeitungsverfahren, umfassend:
Bestimmen (301) durch ein Multicast-Broadcast-Sitzungsverwaltungsfunktions-Netzwerkelement (MB-SMF-Netzwerkelement), eine Multicast-Broadcast-Dienstsitzung (MBS-Sitzung) zu deaktivieren, und Senden einer MBS-Sitzungsunterbrechungsanforderung über ein Zugangs- und Mobilitätsverwaltungsfunktions-Netzwerkelement (AMF-Netzwerkelement) an eine Zugangsnetzwerkvorrichtung; und
Empfangen (304) einer MBS-Sitzungsunterbrechungsantwort durch das MB-SMF-Netzwerkelement von der Zugangsnetzwerkvorrichtung,
wobei die SMF Kontextinformationen für die deaktivierte MBS-Sitzung speichert;
wobei das Bestimmen, die MBS-Sitzung zu deaktivieren, durch das MB-SMF-Netzwerkelement umfasst:
Bestimmen, die MBS-Sitzung zu deaktivieren, durch das MB-SMF-Netzwerkelement gemäß empfangenen Anzeigeinformationen;
wobei die Anzeigeinformationen verwendet werden, um anzuzeigen, dass keine Datenübertragung bei der MBS-Sitzung in einem aktiven Zustand vorliegt.

2. Verfahren nach Anspruch 1, wobei die vom MB-SMF-Netzwerkelement empfangenen Anzeigeinformationen mindestens eines umfassen von:
Anzeigeinformationen, die von der Zugangsnetzwerkvorrichtung gesendet werden;
Anzeigeinformationen, die vom AMF-Netzwerkelement gesendet werden; und
Anzeigeinformationen, die von einem Benutzerebenenfunktions-Netzwerkelement (UPF-Netzwerkelement) gesendet werden.

3. Verfahren nach einem der Ansprüche 1 bis 2, wobei die MBS-Sitzungsunterbrechungsanforderung mindestens eines von Identitätsinformationen der MBS-Sitzung, einer Unterbrechungsursache und einem Operationstyp umfasst und der Operationstyp verwendet wird, um anzuzeigen, ob Tunnelinformationen zwischen einer Kernnetzwerkvorrichtung und der Zugangsnetzwerkvorrichtung freigegeben werden sollen.

4. Verfahren nach Anspruch 1, wobei, wenn die Zugangsnetzwerkvorrichtung die MBS-Sitzungsunterbrechungsanforderung empfängt, die Zugangsnetzwerkvorrichtung bestimmt, ob die Kontextinformationen für die deaktivierte MBS-Sitzung gespeichert werden sollen, wenn die Kontextinformationen für die deaktivierte MBS-Sitzung gespeichert werden müssen, und die Zugangsnetzwerkvorrichtung Anzeigeinformationen in der MBS-Sitzungsunterbrechungsantwort überträgt, wobei die Anzeigeinformationen verwendet werden, um der SMF anzuzeigen, dass sie die Kontextinformationen für die deaktivierte MBS-Sitzung speichern soll.

5. Sitzungsverarbeitungsverfahren, umfassend:
Bestimmen durch ein Multicast-Broadcast-Sitzungsverwaltungsfunktions-Netzwerkelement (MB-SMF-Netzwerkelement), eine Multicast-Broadcast-Dienstsitzung (MBS-Sitzung) zu aktivieren, und Senden einer MBS-Sitzungsaktivierungsanforderung an eine Zugangsnetzwerkvorrichtung; und
Empfangen einer MBS-Sitzungsaktivierungsantwort durch das SMF-Netzwerkelement von der Zugangsnetzwerkvorrichtung,
wobei die SMF Kontextinformationen für die deaktivierte MBS-Sitzung speichert;
wobei das Bestimmen, die MBS-Sitzung zu aktivieren, durch die MB-SMF-Netzwerkvorrichtung umfasst:
Bestimmen, die MBS-Sitzung zu aktivieren, durch die SMF-Netzwerkvorrichtung gemäß empfangenen Anzeigeinformationen;
wobei die Anzeigeinformationen verwendet werden, um anzuzeigen, dass Datenübertragung bei der MBS-Sitzung in einem deaktivierten Zustand vorliegt.

6. Verfahren nach Anspruch 5, wobei die MBS-Sitzungsaktivierungsanforderung Identitätsinformationen der MBS-Sitzung umfasst.

7. Multicast-Broadcast-Sitzungsverwaltungsfunktions-Netzwerkelement (MB-SMF-Netzwerkelement), umfassend:
ein Verarbeitungsmodul (1201), das so konfiguriert ist, dass es bestimmt, eine Multicast-Broadcast-Dienstsitzung (MBS-Sitzung) zu deaktivieren;
ein Sendemodul (1202), das so konfiguriert ist, dass es eine MBS-Sitzungsunterbrechungsanforderung über ein Zugangs- und Mobilitätsverwaltungsfunktions-Netzwerkelement (AMF-Netzwerkelement) an eine Zugangsnetzwerkvorrichtung sendet;
ein Empfangsmodul (1203), das zum Empfangen einer MBS-Sitzungsunterbrechungsantwort von der Zugangsnetzwerkvorrichtung konfiguriert ist; und
ein Speichermodul, das zum Speichern von Kontextinformationen für die deaktivierte MBS-Sitzung konfiguriert ist;
wobei das Verarbeitungsmodul (1201) konfiguriert ist zum:
Bestimmen, die MBS-Sitzung zu deaktivieren, gemäß empfangenen Anzeigeinformationen;
wobei die Anzeigeinformationen verwendet werden, um anzuzeigen, dass keine Datenübertragung bei der MBS-Sitzung in einem aktiven Zustand vorliegt.

8. MB-SMF-Netzwerkelement nach Anspruch 7, wobei die Anzeigeinformationen mindestens eines umfassen von:
Anzeigeinformationen, die von der Zugangsnetzwerkvorrichtung gesendet werden;
Anzeigeinformationen, die vom AMF-Netzwerkelement gesendet werden; und
Anzeigeinformationen, die von einem Benutzerebenenfunktions-Netzwerkelement (UPF-Netzwerkelement) gesendet werden.

9. MB-SMF-Netzwerkelement nach einem der Ansprüche 7 bis 8, wobei die MBS-Sitzungsunterbrechungsanforderung mindestens eines von Identitätsinformationen der MBS-Sitzung, einer Unterbrechungsursache und einem Operationstyp umfasst und der Operationstyp verwendet wird, um anzuzeigen, ob Tunnelinformationen zwischen einer Kernnetzwerkvorrichtung und der Zugangsnetzwerkvorrichtung freigegeben werden sollen.

10. Multicast-Broadcast-Sitzungsverwaltungsfunktions-Netzwerkelement (MB-SMF-Netzwerkelement), umfassend:
ein Verarbeitungsmodul (1401), das so konfiguriert ist, dass es bestimmt, eine Multicast-Broadcast-Dienstsitzung (MBS-Sitzung) zu aktivieren;
ein Sendemodul (1402), das zum Senden einer MBS-Sitzungsaktivierungsanforderung an eine Zugangsnetzwerkvorrichtung konfiguriert ist;
ein Empfangsmodul (1403), das zum Empfangen einer MBS-Sitzungsaktivierungsantwort von der Zugangsnetzwerkvorrichtung konfiguriert ist; und
ein Speichermodul, das zum Speichern von Kontextinformationen für die deaktivierte MBS-Sitzung konfiguriert ist;
wobei das Verarbeitungsmodul (1401) konfiguriert ist zum:
Bestimmen, die MBS-Sitzung zu aktivieren, gemäß empfangenen Anzeigeinformationen; und
wobei die Anzeigeinformationen verwendet werden, um anzuzeigen, dass Datenübertragung bei der MBS-Sitzung in einem deaktivierten Zustand vorliegt.

11. MB-SMF-Netzwerkelement nach Anspruch 10, wobei die MBS-Sitzungsaktivierungsanforderung Identitätsinformationen der MBS-Sitzung umfasst.

12. Zugangsvorrichtung, umfassend:
ein Modul, das so konfiguriert ist, dass es über ein Zugangs- und Mobilitätsverwaltungsfunktions-Netzwerkelement (AMF-Netzwerkelement) eine MBS-Sitzungsunterbrechungsanforderung von einem Multicast-Broadcast-Sitzungsverwaltungsfunktions-Netzwerkelement (MB-SMF-Netzwerkelement) empfängt, wobei die MBS-Sitzungsunterbrechungsanforderung in Reaktion darauf gesendet wird, dass die MB-SMF bestimmt, eine Multicast-Broadcast-Dienstsitzung (MBS-Sitzung) zu deaktivieren; und
ein Modul, das zum Senden einer MBS-Sitzungsunterbrechungsantwort an das MB-SMF-Netzwerkelement konfiguriert ist,
wobei die SMF Kontextinformationen für die deaktivierte MBS-Sitzung speichert;
ein Modul, das zum Senden von Anzeigeinformationen an das MB-SMF-Netzwerkelement konfiguriert ist, wobei die Anzeigeinformationen für das MB-SMF-Netzwerkelement verwendet werden, um zu bestimmen, die MBS-Sitzung zu deaktivieren, und die Anzeigeinformationen verwendet werden, um anzuzeigen, dass keine Datenübertragung bei der MBS-Sitzung in einem aktiven Zustand vorliegt.

13. Zugangsvorrichtung nach Anspruch 12, wobei die MBS-Sitzungsunterbrechungsanforderung mindestens eines von Identitätsinformationen der MBS-Sitzung, einer Unterbrechungsursache und einem Operationstyp umfasst und der Operationstyp verwendet wird, um anzuzeigen, ob Tunnelinformationen zwischen einer Kernnetzwerkvorrichtung und der Zugangsnetzwerkvorrichtung freigegeben werden sollen.

14. Zugangsvorrichtung nach Anspruch 12, ferner umfassend:
ein Modul, das so konfiguriert ist, dass es, wenn die Zugangsnetzwerkvorrichtung die MBS-Sitzungsunterbrechungsanforderung empfängt, bestimmt, ob die Kontextinformationen für die deaktivierte MBS-Sitzung gespeichert werden sollen, wenn die Kontextinformationen für die deaktivierte MBS-Sitzung gespeichert werden müssen, und Anzeigeinformationen in der MBS-Sitzungsunterbrechungsantwort überträgt, wobei die Anzeigeinformationen verwendet werden, um der SMF anzuzeigen, dass sie die Kontextinformationen für die deaktivierte MBS-Sitzung speichern soll.

## Revendications

1. Procédé de traitement de session, le procédé comprenant les étapes suivantes :
déterminer (301), par un élément de réseau de fonction de gestion de session, SMF, de diffusion par multidiffusion, MB, de désactiver une session de service de diffusion par multidiffusion, MBS, et envoyer, par l'intermédiaire d'un élément de réseau de fonction de gestion de l'accès et de la mobilité, AMF, une demande de suspension de session MBS à un dispositif de réseau d'accès ; et
recevoir (304), par l'élément de réseau MB-SMF, une réponse de suspension de session MBS de la part du dispositif de réseau d'accès,
dans lequel la SMF stocke des informations de contexte pour la session MBS désactivée ;
dans lequel la détermination, par l'élément de réseau MB-SMF, de la désactivation de la session MBS comprend :
de déterminer, par l'élément de réseau MB-SMF, de désactiver la session MBS en fonction des informations d'indication reçues ;
les informations d'indication étant utilisées pour indiquer qu'il n'y a pas de transmission de données sur la session MBS à l'état actif.

2. Procédé selon la revendication 1, dans lequel les informations d'indication reçues par l'élément de réseau MB-SMF comprennent au moins l'une des informations suivantes :
des informations d'indication envoyées par le dispositif de réseau d'accès ;
des informations d'indication envoyées par l'élément de réseau AMF ; et
des informations d'indication envoyées par un élément de réseau UPF (User Plane Function).

3. Procédé selon l'une quelconque des revendications 1 et 2, dans lequel la demande de suspension de session MBS comprend au moins l'une des informations suivantes : des informations d'identité de la session MBS, une cause de suspension et un type d'opération, et le type d'opération est utilisé pour indiquer s'il faut libérer les informations de tunnel entre un dispositif de réseau central et le dispositif de réseau d'accès.

4. Procédé selon la revendication 1, dans lequel, lorsque le dispositif de réseau d'accès reçoit la demande de suspension de session MBS, le dispositif de réseau d'accès détermine s'il convient de stocker les informations de contexte pour la session MBS désactivée, si les informations de contexte pour la session MBS désactivée doivent être stockées, le dispositif de réseau d'accès achemine des informations d'indication dans la réponse de suspension de session MBS, où les informations d'indication sont utilisées pour indiquer à la SMF de stocker les informations de contexte pour la session MBS désactivée.

5. Procédé de traitement de session, comprenant les étapes suivantes :
déterminer, par un élément de réseau de fonction de gestion de session, SMF, de diffusion par multidiffusion, MB, d'activer une session désactivée de service de diffusion par multidiffusion, MBS, et envoyer une demande d'activation de session MBS à un dispositif de réseau d'accès ; et
recevoir, par l'élément de réseau SMF, une réponse d'activation de session MBS de la part du dispositif de réseau d'accès,
dans lequel le SMF stocke des informations de contexte pour la session MBS désactivée ;
dans lequel la détermination, par le dispositif de réseau MB-SMF, d'activer la session MBS comprend les étapes suivantes :
déterminer, par le dispositif de réseau SMF, d'activer la session MBS en fonction des informations d'indication reçues ; et
les informations d'indication étant utilisées pour indiquer qu'il existe une transmission de données sur la session MBS dans un état désactivé.

6. Procédé selon la revendication 5, dans lequel la demande d'activation de session MBS comprend des informations d'identité de la session MBS.

7. Élément de réseau de fonction de gestion de session, SMF, de diffusion par multidiffusion, MB, comprenant :
un module de traitement (1201) configuré pour déterminer de désactiver une session de service de diffusion par multidiffusion, MBS ;
un module d'envoi (1202) configuré pour envoyer, par l'intermédiaire d'un élément de réseau de fonction de gestion de l'accès et de la mobilité, AMF, une demande de suspension de session MBS à un dispositif de réseau d'accès ;
un module de réception (1203) configuré pour recevoir une réponse de suspension de session MBS de la part du dispositif de réseau d'accès ; et
un module de stockage configuré pour stocker les informations de contexte de la session MBS désactivée ;
dans lequel le module de traitement (1201) est configuré pour :
déterminer la désactivation de la session MBS en fonction des informations d'indication reçues ;
les informations d'indication étant utilisées pour indiquer qu'il n'y a pas de transmission de données sur la session MBS dans un état actif.

8. Élément de réseau MB-SMF selon la revendication 7, dans lequel les informations d'indication comprennent au moins l'une des informations suivantes :
des informations d'indication envoyées par le dispositif de réseau d'accès ;
des informations d'indication envoyées par l'élément de réseau AMF ; et
des informations d'indication envoyées par un élément de réseau UPF (User Plane Function).

9. Élément de réseau MB-SMF selon l'une quelconque des revendications 7 à 8, dans lequel la demande de suspension de session MBS comprend au moins l'une des informations suivantes : des informations d'identité de la session MBS, une cause de suspension et un type d'opération, et le type d'opération est utilisé pour indiquer s'il faut libérer les informations de tunnel entre un dispositif de réseau central et le dispositif de réseau d'accès.

10. Élément de réseau de fonction de gestion de session, SMF, de diffusion par multidiffusion, MB, comprenant :
un module de traitement (1401) configuré pour déterminer d'activer une session de service de diffusion par multidiffusion, MBS, désactivée ;
un module d'envoi (1402) configuré pour envoyer une demande d'activation de session MBS à un dispositif de réseau d'accès ;
un module de réception (1403) configuré pour recevoir une réponse d'activation de session MBS du dispositif de réseau d'accès ; et
un module de stockage configuré pour stocker des informations de contexte pour la session MBS désactivée ;
dans lequel le module de traitement (1401) est configuré pour :
déterminer d'activer la session MBS en fonction des informations d'indication reçues ; et
les informations d'indication étant utilisées pour indiquer qu'il existe une transmission de données sur la session MBS dans un état désactivé.

11. Élément de réseau MB-SMF selon la revendication 10, dans lequel la demande d'activation de session MBS comprend des informations d'identité de la session MBS.

12. Dispositif d'accès comprenant :
un module configuré pour recevoir, par l'intermédiaire d'un élément de réseau de fonction de gestion de l'accès et de la mobilité, AMF, une demande de suspension de session MBS provenant d'un élément de réseau de fonction de gestion de session, SMF, de diffusion par multidiffusion, MB, la demande de suspension de session MBS étant envoyée en réponse au fait que la MB-SMF détermine de désactiver une session de service de diffusion par multidiffusion, MBS ; et
un module configuré pour envoyer une réponse de suspension de session MBS à l'élément de réseau MB-SMF, dans lequel la SMF stocke des informations de contexte pour la session MBS désactivée,
un module configuré pour envoyer des informations d'indication à l'élément de réseau MB-SMF, les informations d'indication étant utilisées par l'élément de réseau MB-SMF pour déterminer de désactiver la session MBS et les informations d'indication étant utilisées pour indiquer qu'aucune transmission de données n'existe sur la session MBS dans un état actif.

13. Dispositif d'accès selon la revendication 12, dans lequel la demande de suspension de session MBS comprend au moins l'une des informations suivantes : des informations d'identité de la session MBS, une cause de suspension et un type d'opération, et le type d'opération est utilisé pour indiquer s'il faut libérer les informations de tunnel entre un dispositif de réseau central et le dispositif de réseau d'accès.

14. Dispositif d'accès selon la revendication 12, comprenant en outre :
un module configuré pour, lorsque le dispositif de réseau d'accès reçoit la demande de suspension de session MBS, déterminer s'il convient de stocker les informations de contexte pour la session MBS désactivée, si les informations de contexte pour la session MBS désactivée doivent être stockées, acheminer des informations d'indication dans la réponse de suspension de session MBS, où les informations d'indication sont utilisées pour indiquer à la SMF de stocker les informations de contexte pour la session MBS désactivée.
